Europäisches Patentamt

European Patent Office

Office européen des brevets

(19)

(11) **EP 1 343 575 B1**

(12) **FASCICULE DE BREVET EUROPEEN**

(45) Date de publication et mention
de la délivrance du brevet:
**04.08.2004 Bulletin 2004/32**

(51) Int Cl.⁷: **B01D 61/22**, B01D 65/02,
B01D 65/08, C02F 1/44

(21) Numéro de dépôt: **01270376.5**

(22) Date de dépôt: **04.12.2001**

(86) Numéro de dépôt international:
**PCT/FR2001/003828**

(87) Numéro de publication internationale:
**WO 2002/047800 (20.06.2002 Gazette 2002/25)**

(54) **PROCEDE DE REGULATION D'UNE INSTALLATION DE FILTRATION SUR MEMBRANES**

VERFAHREN ZUR REGULIERUNG EINER MEMBRANFILTERANLAGE

METHOD FOR REGULATING A MEMBRANE FILTERING INSTALLATION

(84) Etats contractants désignés:
**AT BE CH CY DE DK ES FI FR GB GR IE IT LI LU
MC NL PT SE TR**

(30) Priorité: **13.12.2000 FR 0016249**

(43) Date de publication de la demande:
**17.09.2003 Bulletin 2003/38**

(73) Titulaire: **Ondeo Services
92000 Nanterre (FR)**

(72) Inventeurs:
 • **VINCENT, Nathalie
 F-31130 QUINT-FONSEGRIVES (FR)**
 • **CABASSUD, Corrine
 F-31650 SAINT ORENS DE GAMEVILLE (FR)**
 • **CABASSUD, Michel
 F-31650 SAINT ORENS DE GAMEVILLE (FR)**
 • **DURAND-BOURLIER, Laurence
 F-92140 CLAMART (FR)**
 • **LAINE, Jean-Michel
 F-78920 ECQUEVILLY (FR)**

(74) Mandataire: **Peaucelle, Chantal et al
Cabinet ARMENGAUD AINE
3, avenue Bugeaud
75116 Paris (FR)**

(56) Documents cités:
 **WO-A-88/01529          WO-A-93/20721
 US-A- 5 879 557**

 • **PATENT ABSTRACTS OF JAPAN vol. 1999, no.
 04, 30 avril 1999 (1999-04-30) & JP 11 019485 A
 (FUJI ELECTRIC CO LTD), 26 janvier 1999
 (1999-01-26)**
 • **DATABASE WPI Week 199541 Derwent
 Publications Ltd., London, GB; AN 1995-316099
 XP002174959 & JP 07 213875 A ((HIEJ) HITACHI
 OLANT ENG & CONSTR CO), 15 août 1995
 (1995-08-15)**
 • **DATABASE WPI Week 199833 Derwent
 Publications Ltd., London, GB; AN 1998-380289
 XP002174960 & JP 10 151328 A ((MAZK)
 MAEZAWA KOGYO KK)**
 • **PATENT ABSTRACTS OF JAPAN vol. 1999, no.
 01, 29 janvier 1999 (1999-01-29) & JP 10 277549
 A (JAPAN ORGANO CO LTD)**

**Description**

La présente invention concerne l'exploitation de stations de filtration sur membranes et plus particulièrement la régulation de telles installations par modélisation prédictive du colmatage, par réseaux de neurones selon la revendication 1.

On sait que l'utilisation de membranes, notamment d'ultrafiltration, est devenue générale au cours des dernières années, notamment dans le domaine de la production d'eau potable ou industrielle. Les membranes à fibres creuses ainsi utilisées permettent de répondre aux exigences de la qualité des eaux, même dans le cas d'une dégradation des ressources.

De nombreuses recherches ont actuellement pour but d'améliorer la productivité des installations de production d'eau potable ou industrielle mettant en oeuvre de telles membranes. Ces recherches reposent sur la connaissance des différents facteurs et phénomènes impliqués dans la filtration des eaux de surface ou autres fluides de qualité variable. Le premier facteur limitant la production des membranes résulte du dépôt de particules sur la surface et/ou dans les pores des membranes. Ce premier facteur est un phénomène à court terme. Afin d'éliminer ces particules qui se déposent sur les membranes sous la forme d'une couche ou gâteau, on effectue périodiquement des lavages hydrauliques, pneumatiques ou hydro-pneumatiques. Le second facteur limitant est l'adsorption de matières organiques sur la surface des membranes et dans les pores de cette dernière, ce facteur constituant un phénomène à long terme.

La partie du colmatage des membranes pouvant être éliminée par lavages hydrauliques, pneumatiques ou hydro-pneumatiques est souvent dénommée colmatage réversible, alors que l'autre partie est appelée colmatage irréversible.

Il existe de nombreux paramètres impliqués dans le colmatage des membranes utilisées dans le traitement de l'eau. Il s'agit d'une part des paramètres relatifs à la qualité du fluide à traiter et d'autre part des paramètres de fonctionnement, ces deux types de paramètres étant interdépendants.

On comprend que l'une des façons permettant de savoir comment augmenter la productivité de l'installation de filtration réside dans une meilleure compréhension des phénomènes qui sont impliqués dans le colmatage des membranes. On est amené, dans ce but, à effectuer une modélisation de l'installation membranaire. Bien qu'il existe un très grand nombre d'études consacrées au colmatage, les modèles qui ont été réalisés ne sont pas applicables pour décrire le colmatage des membranes par des fluides complexes tels que les eaux naturelles. Il existe cependant un certain nombre d'outils prometteurs permettant de développer des modèles de simulation. Parmi ceux-ci, on peut citer les réseaux de neurones artificiels. De tels réseaux ont été utilisés avec succès dans la prédiction de performances à court terme. Par ailleurs, on a envisagé de développer un modèle permettant d'assurer une prédiction de la productivité d'une installation d'obtention d'eau potable, cette prédiction reposant à la fois sur la qualité de l'eau à traiter et sur des paramètres de fonctionnement sur le long terme, en tenant compte d'un nombre minimal de paramètres. A cet égard, on peut se référer à la publication « NEURAL NETWORKS FOR LONG TERM PREDICTION OF FOULING AND BACKWASH EFFICIENCY IN ULTRAFILTRATION FOR DRINKING WATER PRODUCTION » de N. Delgrange-Vincent et al, parue dans Desalination, 131, pp 353-362, 2000.

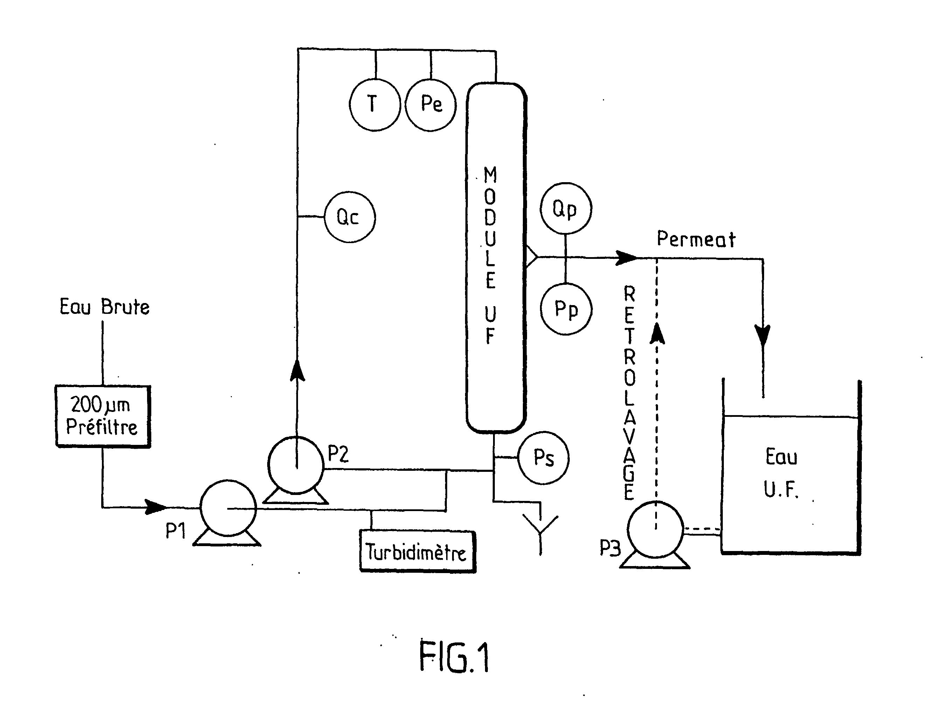

On se réfère maintenant à la figure 1 des dessins annexés qui représente de façon schématique une installation pilote d'ultrafiltration utilisée pour l'obtention d'eau potable.

Sur cette figure, on a schématisé le module d'ultrafiltration du type à fibres creuses. L'eau à traiter est préalablement préfiltrée, puis injectée dans la boucle de circulation du module à l'aide d'une pompe P1, une pompe P2 assurant la circulation dans la boucle.

Les facteurs relatifs à la qualité de l'eau sont les suivants :

- température T ;
- conductivité ;
- pH ;
- concentration en oxygène dissous ($O_2$) ;
- COT (carbone organique total) ;
- potentiel redox EH ;
- turbidité (Tur) ;
- absorbance UV (uv).

Les paramètres de fonctionnement de l'installation sont les suivants :

- la pression transmembranaire, $P_{tm}$ ;
- le débit de perméat, $Q_P$ ;
- le débit de circulation, QC ;
- le débit de purge de la boucle de circulation, $Q_{Purge}$ ;
- le temps de filtration, $t_F$ ;
- la pression de rétrolavage, $P_{RL}$
- la durée de rétrolavage, $t_{RL}$ ;
- le débit de rétrolavage hydraulique, $Q_{RL}$ ;
- la concentration en chlore (ou autre additif chimique) de l'eau de rétrolavage, $[Cl_2]_{RL}$ ;
- les paramètres caractéristiques de l'injection d'additifs pendant le cycle de filtration, aux fins d'augmenter les performances de la filtration et/ou la qualité de l'effluent filtré.

L'installation produit un débit constant de perméat $Q_P$ entraînant une augmentation de pression lors de la période de filtration. Le débit de circulation $Q_c$ représente la vitesse d'alimentation à l'admission du module. On effectue périodiquement des lavages hydrauliques des membranes avec de l'eau filtrée additionnée de chlore. On peut ainsi diminuer le niveau de colmatage de la membrane.

La résistance hydraulique totale du module d'ultrafiltration est exprimée par la relation :

$$R = Tmp/(\mu.Q_p/S)$$

où $\mu$ est la viscosité de l'eau, fonction de la température Tmp est la pression transmembranaire moyenne et S est la surface membranaire.

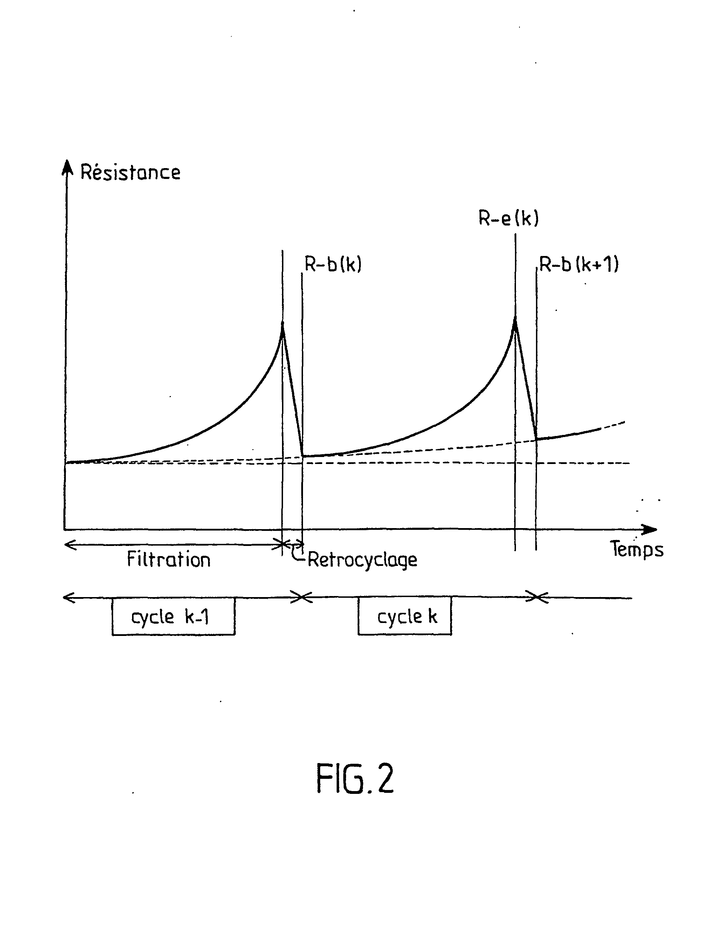

La résistance totale comprend la résistance de la membrane, la résistance due au colmatage réversible et la résistance due au colmatage irréversible. Dans le cas d'un débit constant de perméat, la résistance augmente durant la période de filtration et elle décroît après rétrolavage ainsi qu'on l'a représenté sur la figure 2 des dessins annexés.

Par conséquent, une courbe de production est constituée de cycles, chacun de ceux-ci étant caractérisé par la résistance (Rf) à la fin du cycle de filtration et au début du cycle suivant, c'est-à-dire après lavage hydraulique (Rd). Des variations des durées des cycles (Rf) et (Rd) suffisent donc à caractériser et à décrire les variations du processus de filtration.

Les performances d'un pilote de production peuvent être exprimées par :

- la production brute, c'est-à-dire le débit de perméat en sortie du module et
- la production nette, prenant en compte les pertes en eau lors des lavages et la non production pendant le temps de lavage.

Dans le cas d'un rétrolavage, le débit net s'exprime par la relation :

$$Qp_{net} = (V_F - V_{RL})/(t_F + t_{RL})$$

dans laquelle :

$V_F$ est le volume filtré ;
$V_{RL}$ est le volume de rétrolavage ;
$t_F$ est le temps de filtration et
$t_{RL}$ est le temps de rétrolavage.

L'objet de la présente invention est d'apporter un procédé de régulation d'une installation de filtration sur membrane conçue de façon à éviter un colmatage irréversible des membranes tout en maximisant la productivité (estimée par un critère adapté, tel que la production nette), quelle que soit la qualité du fluide entrant dans le système. En d'autres termes, le problème devant être résolu par la présente invention consiste à asservir les performances d'une installation de filtration à la qualité du fluide entrant ; cet asservissement est directement fonction de l'évolution du colmatage de ladite installation, évolution prédite par modélisation par réseaux de neurones, de façon à simuler le fonctionnement à long terme de l'installation de filtration, le modèle permettant, en temps réel, de contrôler et de commander l'installation.

Si l'on se réfère au concept du flux critique, tel qu'explicité dans la littérature, il est préférable de fonctionner à un flux suffisamment faible pour éviter totalement un colmatage réversible. Par ailleurs, on a observé que lorsque la résistance hydraulique des membranes augmente en début de cycle, l'intensité du colmatage irréversible augmente avec le temps. Cette constatation signifie que plus la membrane est colmatée, plus l'intensité du colmatage irréversible augmente. Il se pose alors un problème qui est dû au fait que le flux produit est extrêmement faible lorsque l'eau traitée est de mauvaise qualité. Un compromis consiste à trouver, à chaque cycle, les conditions opératoires telles que, même si un colmatage se produit, il est possible de l'éliminer par lavage hydraulique, et de faire en sorte que ce colmatage ne soit pas irréversible.

Afin d'effectuer cette régulation, il est possible d'agir sur un certain nombre de paramètres de fonctionnement, lesquels ainsi qu'on l'a vu ci-dessus, peuvent être choisis parmi :

- la pression transmembranaire, $P_{tm}$ ;
- le débit de perméat, $Q_P$ ;
- le débit de circulation, Qc, avec passage possible d'un mode de recirculation à un mode frontal ;
- le débit de purge de la boucle de circulation, $Q_{purge}$ ;
- le temps de filtration, $t_F$ ;
- la pression de rétrolavage, $P_{RL}$ ;
- la durée de rétrolavage, $t_{RL}$ ;
- le débit de rétrolavage hydraulique, $Q_{RL}$ ;
- la concentration en chlore (ou autre additif chimique) de l'eau de rétrolavage, $[Cl_2]_{RL}$ ;
- les paramètres caractéristiques de l'injection d'additifs pendant le cycle de filtration, aux fins d'augmenter les performances de la filtration et/ou la qualité de l'effluent filtré.

La présente invention a retenu, à titre d'exemple, pour cette régulation, d'une part le temps de filtration et d'autre part le débit de perméat, étant bien entendu que d'autres combinaisons de paramètres de fonctionnement peuvent également être mises en jeu sans sortir pour autant du cadre de l'invention.

On aurait pu envisager de travailler à débit de perméat et temps de filtration minimaux de façon à choisir l'approche la plus prudente par rapport au phénomène de colmatage, mais dans ce cas, la productivité serait trop faible. Selon l'invention, on intervient donc sur les paramètres de productivité, tels que par exemple débit de perméat et temps de filtration de manière à trouver un compromis entre la plus forte production d'eau d'une part, et l'intensité du colmatage d'autre part, la quantification de ce compromis étant obtenue à l'aide d'un modèle par réseaux de neurones qui calcule, en fonction de la qualité du fluide à traiter et de l'état de la membrane à un cycle donné, l'évolution de la perméabilité de la membrane en fonction du temps, sur un horizon déterminé, la qualité du fluide étant simulée (constante ou variable) sur cet horizon.

A priori, deux cas peuvent se présenter :

1°) la qualité du fluide à traiter est telle que le colmatage de la membrane augmente fortement sur l'horizon de prédiction, l'état de colmatage de la membrane pouvant être décrit par des paramètres tels que la résistance hydraulique, la perméabilité ou la pression transmembranaire. Il est alors nécessaire de diminuer les performances que l'on demande du module de filtration membranaire (tels que par exemple débit et/ou temps de filtration) en attendant que la qualité du fluide traité s'améliore ;

2°) la qualité du fluide est relativement bonne et l'intensité du colmatage de la membrane reste faible. On peut alors augmenter la production au cycle suivant.

On a vu ci-dessus que l'état de la membrane à un cycle donné, peut être caractérisé par sa perméabilité, sa résistance hydraulique en début de cycle ou sa pression transmembranaire. Le procédé de régulation objet de l'invention se fixe un niveau de colmatage limite en début de cycle, caractérisé par une perméabilité limite (Lp_c) et on fait en sorte que l'installation fonctionne avec une perméabilité égale ou supérieure à cette valeur.

Ainsi selon l'invention, à chaque cycle k, on va :

1°) acquérir sur le pilote les valeurs de tous les paramètres de qualité et des conditions opératoires nécessaires au modèle ;

2°) les porter en entrée du modèle de réseaux de neurones, qui va calculer la résistance sur un certain horizon de prédiction, ce qui permet d'accéder à la perméabilité au bout de H cycles, soit Lp(k+H). Pour ces calculs, on considère que les paramètres de qualité et les conditions opératoires du module sont constants sur H cycles et égaux aux valeurs correspondantes du cycle k. Il est également possible de prendre une valeur constante égale aux valeurs moyennes sur n cycles qui précèdent le cycle k. On peut également envisager de prendre en compte un profil de variations des valeurs de ces paramètres sur H cycles.

Deux cas peuvent se présenter :

- Cas A : Lp(k+H)< Lp_c : ceci signifie que la membrane se colmate au-delà des limites fixées. Il est donc nécessaire de diminuer la productivité imposée.

- Cas B : Lp(k+H)> Lp_c : ceci signifie qu'il n'y a pas de risque immédiat de colmatage de la membrane. Il est donc possible d'augmenter la productivité imposée aux modules en agissant sur un ou plusieurs des paramètres de fonctionnement, soit, dans cet exemple non limitatif, le débit de perméat et/ou le temps de filtration.

3°) On calcule à l'aide du modèle la perméabilité au bout de H cycles, c'est-à-dire Lp(k+H) pour tous les couples : débit de perméat Qp et temps de filtration $t_F$ et l'on choisit le couple pour lequel on a Lp(k+H) > Lp_c et pour lequel la productivité est la plus élevée. On pourrait également utiliser une procédure d'optimisation du débit net.

Il reste à déterminer quels paramètres il convient de choisir pour appliquer cette régulation. Il est nécessaire de choisir :

- l'horizon de prédiction H ;
- les valeurs minimales et maximales autorisées des paramètres de productivité tels que par exemple les débit de perméat et temps de filtration ;
- les pas de variations de ces paramètres et
- la valeur de la perméabilité limite Lp_c.
     Ce choix des paramètres de régulation est effectué à l'aide de simulations de régulation du pilote.
     On a effectué ces simulations selon la stratégie exposée ci-dessus. Afin de tester la réponse du modèle, on a effectué six manipulations pendant lesquelles il y a eu

ou non des dérives de la résistance hydraulique du module. On a tracé les courbes correspondantes de la qualité de l'eau en fonction du temps.

A chaque cycle k, on a introduit en entrée du modèle les paramètres expérimentaux et les conditions opératoires de début de cycle et le réseau de neurones a calculé, en mode bouclé, la résistance hydraulique sur un horizon de H cycles en partant de l'hypothèse que tous les paramètres d'entrée sont constants pendant ces cycles. On a obtenu ainsi la perméabilité Lp_i(k+H) au bout de H cycles et on calcule le débit net Qp_net_i.

On a alors testé tous les couples (Qp ; $t_F$) que l'on pourrait appliquer au cycle suivant et on a calculé pour chacun la perméabilité Lp(k+H) au bout de H cycles.

- Si Lp_i(k+H)> Lp_c, on garde le couple pour lequel le débit net est supérieur à Qp_net_i, mais avec la condition Lp(k+H)> Lp_c ;
- Si Lp_i(k+H)< Lp_c, on garde le couple pour lequel on obtient Lp(k+H)> Lp_c, en maximisant si possible le débit net.

Ensuite, on utilise le réseau de neurones pour simuler la réponse réelle du pilote au cycle suivant k+1, on y entre les commandes de débit de perméat Qp et de temps de filtration $t_F$ précédemment calculés, ainsi que les nouveaux paramètres de qualité d'eau et de conditions opératoires. Le réseau calcule la résistance en fin de cycle et en début du cycle suivant.

Afin de tenir compte d'éventuelles variations importantes de la qualité des fluides à traiter, il est nécessaire de choisir un horizon suffisamment grand afin de rendre compte d'une dérive de résistance hydraulique, mais toutefois suffisamment faible pour que l'on puisse considérer que la qualité de l'eau est constante sur l'horizon H.

On a également déterminé les pas de variations et des bornes du débit de perméat et du temps de filtration devant être choisis pour appliquer la régulation. Les pas de variations sont les intervalles compris entre les différentes valeurs de débit et de temps testées pour optimiser le débit net.

Enfin, on a testé l'influence du choix de la valeur de la perméabilité limite Lp_c sur les commandes et sur la dérive de perméabilité.

Ces simulations ont permis de valider le procédé de régulation de l'invention en se servant du modèle de réseaux de neurones pour simuler la réponse du pilote. On a ainsi pu vérifier que la perméabilité était maintenue à un niveau particulièrement élevé et que le débit net était élevé par rapport à un fonctionnement conventionnel sans régulation.

Cette technique a été ensuite validée directement sur site, sur le pilote d'ultrafiltration.

On a construit l'algorithme de régulation. Les points essentiels de la stratégie à partir de laquelle cet algorithme a été construit, ont été les suivants :

- variations des commandes de temps de filtration et de débit de perméat (respectivement $t_F$ et Qp) entre des bornes minima et maxima fixées ;
- pour le débit de perméat, variation d'un cycle à l'autre limitée à $5 l.h^{-1}.m^{-2}$ ;
- recherche, pour chaque cycle, du couple ($t_F$ et Qp) qui produit le débit net le plus fort avec la contrainte : Lp(k+H)> Lp_c, Lp_c étant fixée ;
- dans le cas où $t_F$ = $t_F$_min., Qp=Qp_min. et pour autant que Lp(k+H)< Lp_c, génération d'une alarme. Selon un mode de mise en oeuvre, l'alarme déclenche un arrêt général du pilote. On peut cependant introduire une séquence d'actions plus progressive, comme un seuil d'alarme à partir duquel on maintient les commandes au minimum pendant quelques cycles et un autre seuil à partir duquel on arrête le pilote ou bien l'on demande l'intervention de l'opérateur.

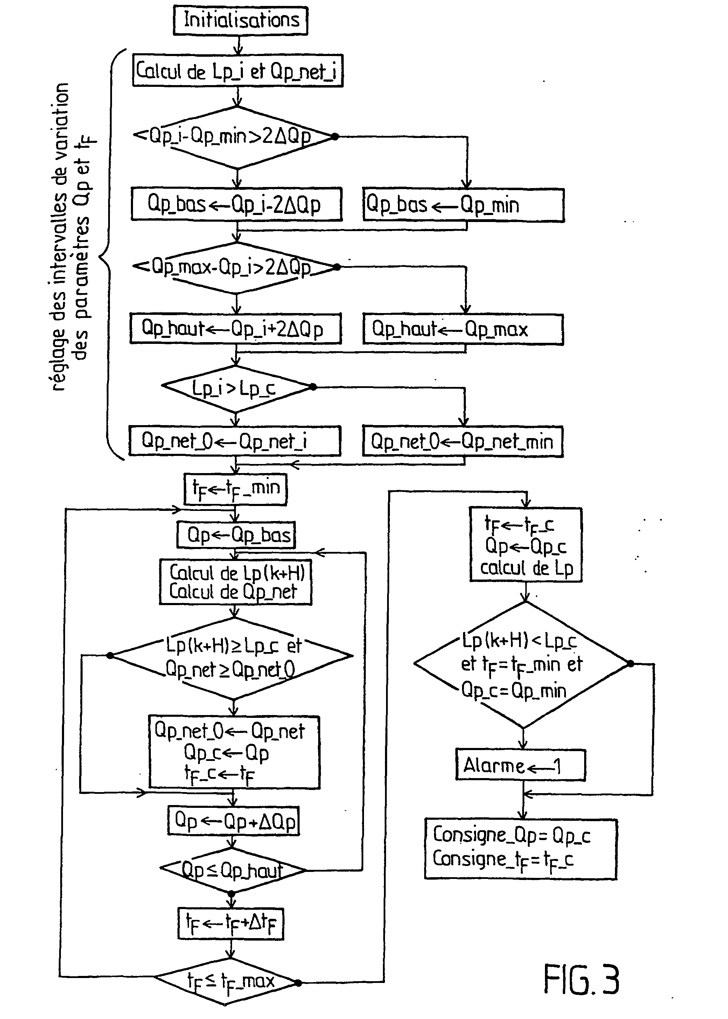

Le schéma de l'algorithme est illustré par la figure 3.

Les constantes intervenant dans l'algorithme sont :

- la consigne de perméabilité : Lp_c ;
- la longueur, en cycles, de l'horizon de prédiction : H ;
- les bornes min et max de variation de Qp et $t_F$ : Qp_min, Qp_max, $t_F$_min, $t_F$_max ;
- les pas de variation de Qp et $t_F$ lors du test de tous les couples (Qp , $t_F$) : $\Delta$Qp et $\Delta t_F$.

Les variables locales sont :

- le débit de perméat Qp et le temps de filtration $t_F$ ;
- Qp_net0, le débit net retenu comme référence pour comparer les performances des couples (Qp et $t_F$) ;
- les variations de Qp étant bornées d'un cycle à l'autre à $\pm 5 l.h^{-1}.m^{-2}$ , Qp_bas et Qp_haut sont les valeurs des bornes entre lesquelles peut varier Qp,
- Qp i et Qp_net_i et Lp_i sont le débit, le débit net et la perméabilité initiaux,
- Lp est le vecteur des perméabilités calculées par le réseau de neurones ;
- Qp_net est le débit net calculé avec les valeurs courantes de Qp et $t_F$ ;
- Qp_c et $t_F$_c sont les valeurs de commandes retenues de débit et de temps, qui seront transmises en variables d'appel, en sortie du programme ;
- alarme est un booléen, transmis en sortie du programme, qui indique si on est en fonctionnement critique ou non.

Les variables d'appel sont :

- entrées : T, Qp, $t_F$, Qc, Tur, COT, $O_2$, pH, UV, EH, Xi, $P_{RL}$, $[Cl]_{RL}$, $t_{RL}$, Ptm ;
- sorties : Qp, $t_F$, alarme.

Dans le bloc « initialisations », on initialise Qp_c et $t_F$_c à Qp_min et $t_F$_min respectivement et l'alarme à 0.

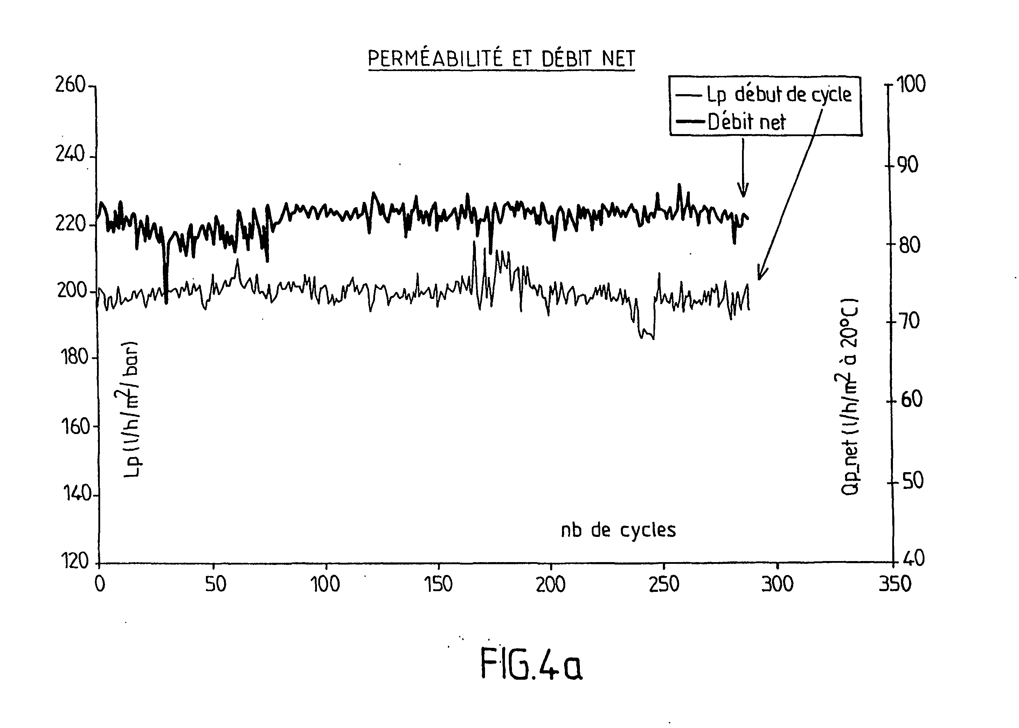

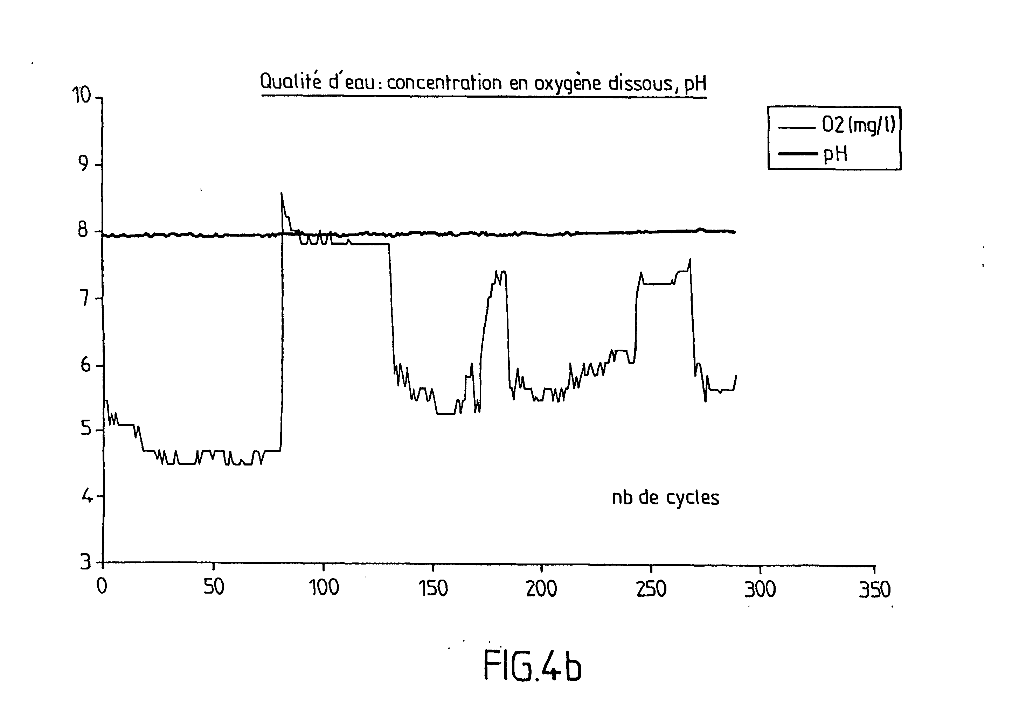

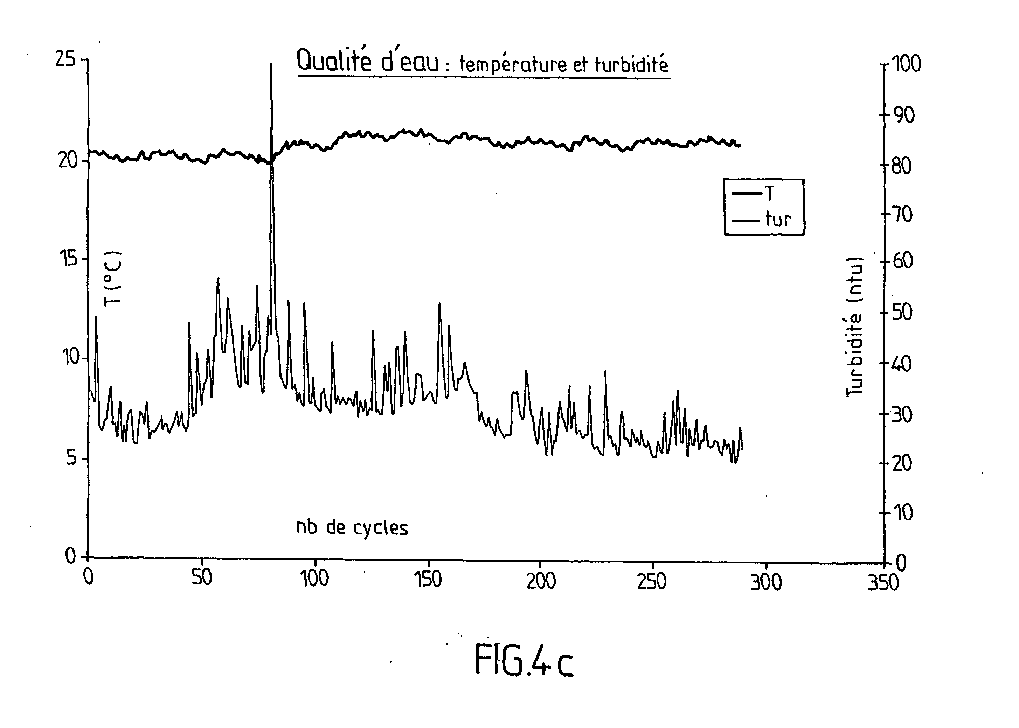

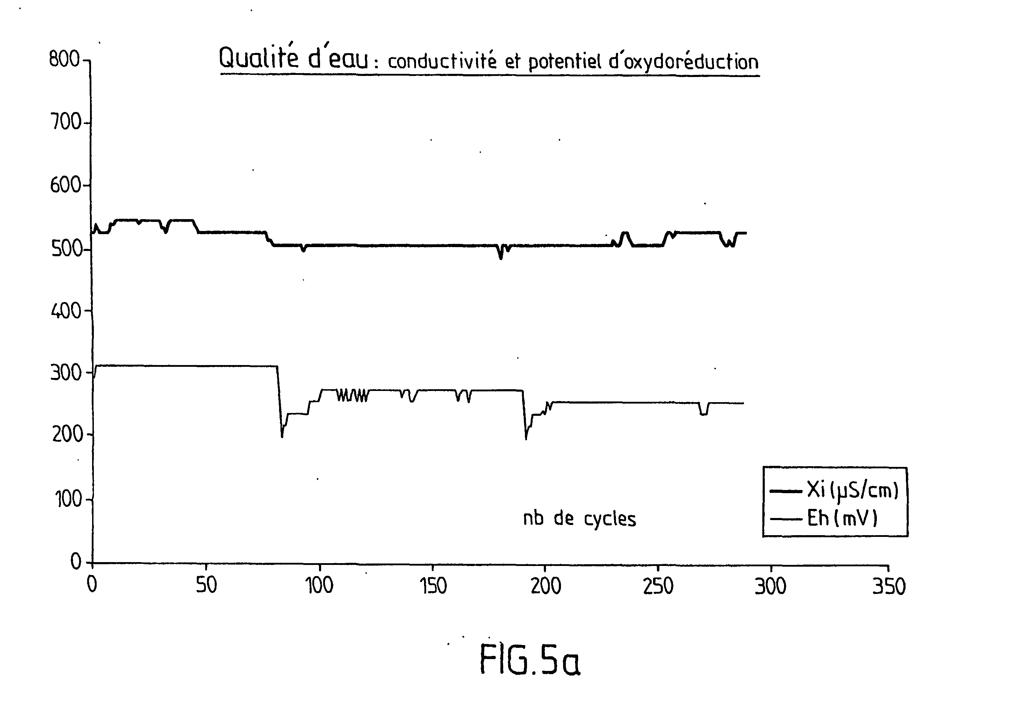

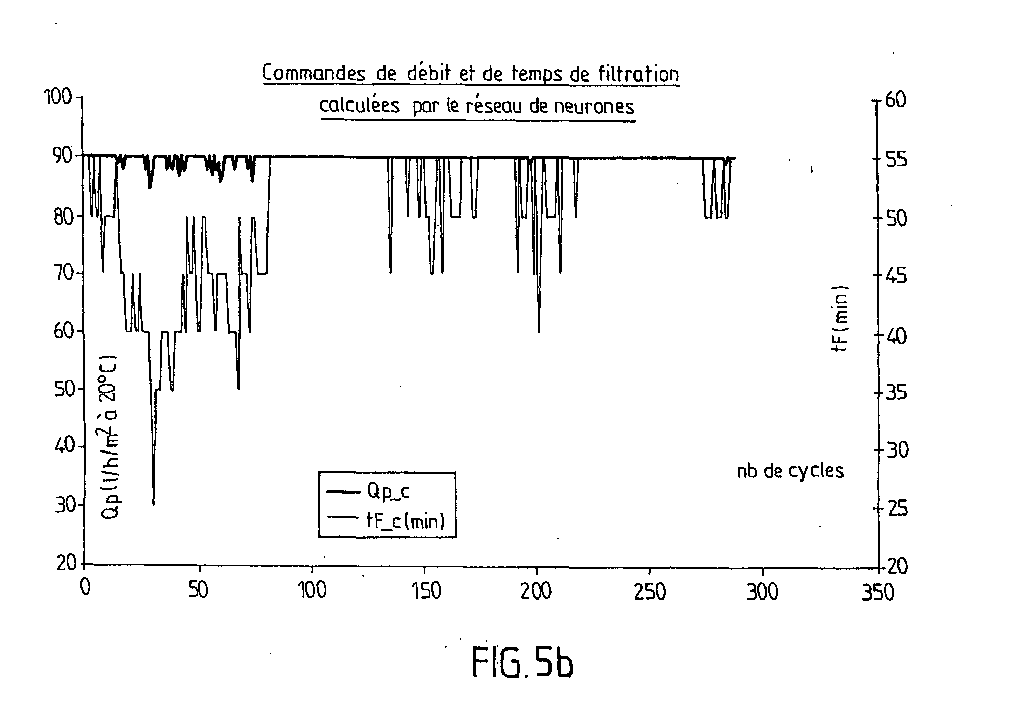

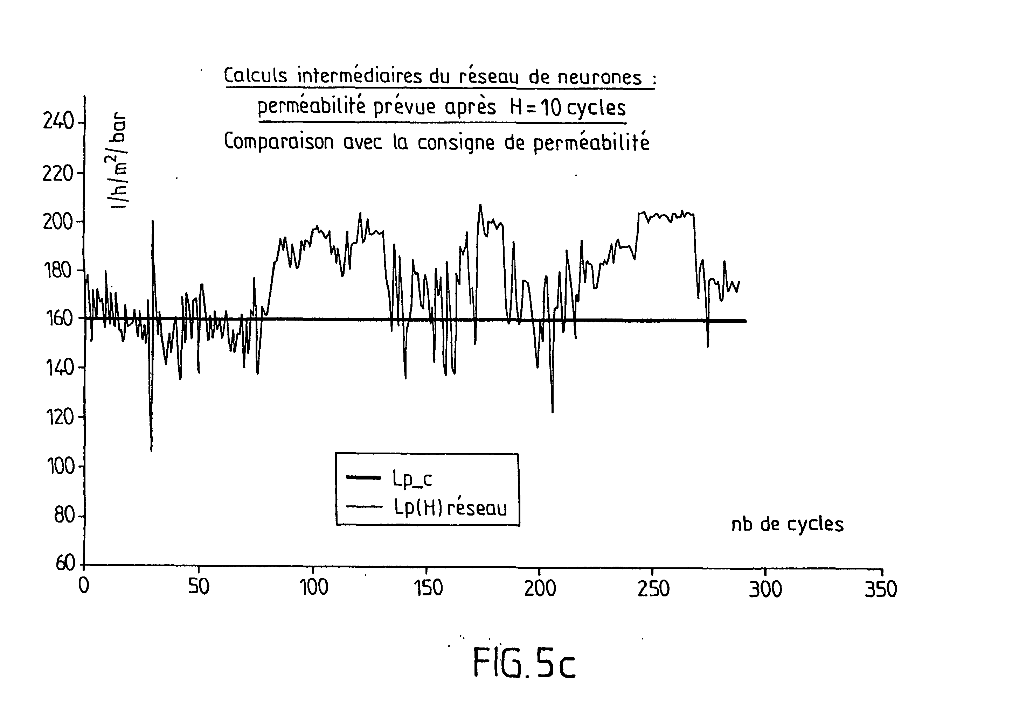

Le procédé de régulation objet de l'invention a été validé sur site. Un exemple des résultats obtenus sur environ une semaine de manipulation est illustré par les courbes des figures 4a à 4c et 5a à 5c sur lesquelles on trouve, en abscisses, le nombre de cycles d'opérations et en ordonnées les différents paramètres mesurés de la qualité de l'eau, la perméabilité, la prédiction de perméabilité après H cycles par le modèle et les commandes de débit de perméat et de temps de filtration.

Il a été possible, grâce à l'invention, de maintenir une perméabilité supérieure à une limite fixée, pendant plusieurs jours, en agissant sur le temps de filtration $t_F$ et sur le débit de perméat Qp pour limiter l'apparition du colmatage des membranes d'ultrafiltration.

**Revendications**

1. Procédé de régulation d'une installation de filtration sur membranes, notamment dans une station de production d'eau potable, conçu de façon à éviter le colmatage irréversible des membranes tout en maximisant la productivité, quelle que soit la qualité du fluide à l'encrée de l'installation, en imposant un niveau de colmatage limite, la régulation agissant de telle sorte que l'installation fonctionne avec un niveau de colmatage égal ou inférieur à cette limite, ce procédé consistant à asservir les paramètres de fonctionnement de l'installation aux performances induites par la qualité du fluide à traiter, en fonction de prédictions d'évolution du colmatage membranaire effectuées par modélisation par réseaux de neurones de façon à simuler le fonctionnement à long terme de l'installation de filtration sur membranes, le modèle permettant

- en fonction de la qualité du fluide influant et de l'état des membranes lors d'un cycle donné, de calculer l'évolution de l'état de colmatage desdites membranes en fonction du temps, sur un horizon déterminé, ledit calcul étant effectué pour une qualité du fluide influant simulée, constante ou variable, sur cet horizon (H) et
- de contrôler et d'ajuster les paramètres de fonctionnement de l'installation,

**caractérisé en ce que**, à chaque cycle de production :

- on détermine sur l'installation les valeurs expérimentales de tous les paramètres de qualité et de conditions opératoires ;
- les paramètres sont portés en encrée du modèle de prévision de colmatage traité sur réseaux de neurones et qui calcule l'évolution du colmatage sur un horizon de prédiction (H), ce qui permet de prévoir la perméabilité au terme de H cycles de production ;
- on diminue le débit net imposé lorsque la perméabilité au terme de H cycles est inférieure à la perméabilité limite (Lp_c) et
- on augmente le débit net imposé lorsque la perméabilité au terme de H cycles est supérieure à la perméabilité limite (Lp_c) en agissant sur le débit de perméat et/ou sur le temps de filtration et,
- on asservit les valeurs respectives du couple : débit de perméat-temps de filtration de telle sorte que la perméabilité au terme de H cycles soit égale ou supérieure à la perméabilité limite (Lp_c) et que le débit net soit le plus élevé possible.

**2.** Procédé selon la revendication 1, **caractérisé en ce qu'**on asservit les valeurs respectives d'un ou plusieurs des paramètres de fonctionnement suivants :

- débit de perméat ou pression transmembranaire, selon que l'on fonctionne, en production, à pression constante ou à débit constant ;
- temps de filtration ;
- débit de circulation, avec passage possible d'un mode de recirculation à un mode frontal ;
- débit de purge de la boucle de circulation ;
- durée du rétrolavage ;
- pression de rétrolavage ou débit de rétrolavage, selon qu'on fonctionne à pression constante ou à débit constant pour le rétrolavage ;
- concentration de chlore dissous ou de tout autre additif dans l'eau de rétrolavage et
- paramètres d'injection/dosage d'un additif pendant le cycle de filtration.

## Patentansprüche

**1.** Verfahren zum Regeln einer Anlage zur Filtration auf Membranen, insbesondere in einer Anlage zum Gewinnen von Trinkwasser, das so gestaltet ist, dass die irreversible Verstopfung der Membranen vermieden wird, wobei zugleich die Produktivität maximiert wird, welcher Qualität auch immer die Flüssigkeit am Einlauf der Anlage ist, wobei ein Grenz-Verstopfungsniveau vorgegeben wird und die Regelung so arbeitet, dass die Anlage mit einem Verstopfungsniveau arbeitet, das gleich oder geringer als diese Grenze ist, wobei dieses Verfahren darin besteht, die Arbeitsparameter der Anlage auf die von der Qualität der zu behandelnden Flüssigkeit vorgegebenen Anforderungen zu steuern, in Funktion von Voraussagen über die Entwicklung der Verstopfung der Membranen, welche durch Modellerstellung in neuronalen Netzen derart ausgeführt werden, dass die Langzeit-Funktion der Anlage bei der Filtration auf Membranen simuliert wird, wobei das Modell es erlaubt:

- in Funktion von der Qualität der einfließenden Flüssigkeit und vom Zustand der Membranen während eines gegebenen Zyklus die Entwicklung des Zustandes der Verstopfung besagter Membranen über der Zeit für einen vorbestimmten Horizont zu berechnen, wobei diese Berechnung für eine simulierte, konstante oder variable Qualität der einfließenden Flüssigkeit auf diesem Horizont (H) durchgeführt wird, und
- die Arbeitsparameter der Anlage zu regeln und einzustellen,

**dadurch gekennzeichnet, dass** in jedem Produktionszyklus:

- in der Anlage die experimentellen Werte aller Parameter der Qualität und der Betriebsbedingungen bestimmt werden;

- die Parameter am Eingang des in neuronalen Netzen behandelten Modells der Voraussage der Verstopfung eingespeist werden, welches die Entwicklung der Verstopfung auf einen Voraussage-Horizont (H) berechnet, was es erlaubt, die Permeabilität am Ende von H Zyklen der Produktion vorher zu sehen;
- der Netto-Zuflussstrom vermindert wird, wenn die Permeabilität am Ende von H Zyklen geringer ist als die Grenz-Permeabilität (Lp_c) und
- der Netto-Zuflussstrom erhöht wird, wenn die Permeabilität am Ende von H Zyklen höher ist als die Grenz-Permeabilität (Lp_c), indem man auf den Massenstrom des Permeats und/oder auf die Zeit für die Filtrierung einwirkt, und
- die jeweiligen Werte des Paares: Massenstrom des Permeats - Zeit für die Filtrierung derart eingesteuert werden, dass die Permeabilität am Ende von H Zyklen gleich oder höher ist als die Grenz-Permeabilität (Lp_c) und dass der Netto-Massenstrom so hoch wie möglich ist.

2. Verfahren nach Anspruch 1, **dadurch gekennzeichnet, dass** man die jeweiligen Werte eines oder mehrerer der folgenden Arbeitsparameter einsteuert :

   - Massenstrom des Permeats oder Druckabfall über die Membran, je nachdem, ob in der Produktion mit konstantem Druck oder mit konstantem Massenstrom gearbeitet wird;
   - Zeit für die Filtrierung;
   - Umlauf-Massenstrom, mit möglichem Durchlauf eines Modus der Rezirkulation zu einem Frontal-Modus;
   - Auswaschungs-Massenstrom der Umlaufschleife;
   - Dauer der Rückspülung;
   - Druck der Rückspülung oder Massenstrom der Rückspülung, je nachdem, ob bei der Rückspülung mit konstantem Druck oder mit konstantem Massenstrom gearbeitet wird;
   - Konzentration von gelöstem Chlor oder jedes anderen Additivs in dem Wasser für die Rückspülung und
   - Einspritz- oder Dosierungsparameter eines Additivs während des Filtrierungs-Zyklus.

## Claims

1. Method for regulating a membrane filtration installation, particularly in a drinking water production station, designed so as to avoid the irreversible clogging of membranes whilst maximizing productivity no matter what the quality of the fluid on entering the installation, by imposing a clogging limit, the control acting in such a way that the installation operates with a clogging level equal to or below said limit, said method consisting of making the operating parameters of the installation dependent on performance characteristics induced by the quality of the fluid to be treated, as a function of membrane clogging evolution predictions performed by modelling using neuron networks in such a way as to simulate the long term operation of the membrane filtration installation, the model permitting:

   - as a function of the quality of the inflowing fluid and the state of the membranes during a given cycle, the calculation of the evolution of the clogging state of said membranes as a function of time, on a given horizon, said calculation being performed for a constant or variable, simulated, inflowing fluid quality, on said horizon (H) and
   - controlling and adjusting the operating parameters of the installation, **characterized in that**, for each production cycle:
   - the experimental values of all the quality parameters and operating conditions are determined on the installation,
   - the parameters are placed on entering the clogging forecasting model which is treated on neuron networks,and evolution of the clogging is calculated on a prediction horizon (H), which makes it possible to forecast permeability after H production cycles,
   - the nett flow rate imposed when the permeability after H cycles is below the limit permeability (Lp_c) is reduced and
   - the nett flow rate imposed when the permeability after H cycles exceeds the limit permeability (Lp_c) is increased by acting on the permeate flow rate and/or on the filtration time and
   - the respective values of the pair: permeate flow rate-filtration time are controlled in such a way that the permeability after H cycles is equal to or exceeds the limit permeability (Lp_c) and the nett flow rate is as high as possible.

2. Method according to claim 1, **characterized in that** there is a control of the respective values of one or more of the following operating parameters:

   - permeate flow rate or transmembrane pressure, as a function of whether, in production, operation occurs under constant pressure or constant flow rate,
   - filtration time,
   - circulation flow rate, with possible passage from a recycling mode to a frontal mode,
   - draining rate of the circulation loop,
   - backwashing duration,
   - backwashing pressure or backwashing flow rate, depending on whether operation takes place at constant pressure or constant flow rate for backwashing,

- concentration of dissolved chlorine or any other additive in the backwashing water and
- parameters concerning the injection/dosing of an additive during the filtration cycle.

FIG.1

FIG.2

FIG.3

11

PERMÉABILITÉ ET DÉBIT NET

FIG.4a

EP 1 343 575 B1

Qualité d'eau : concentration en oxygène dissous, pH

O2 (mg/l)
pH

nb de cycles

FIG.4b

Qualité d'eau : température et turbidité

FIG.4c

EP 1 343 575 B1

FIG.5a

Commandes de débit et de temps de filtration calculées par le réseau de neurones

FIG.5b

Calculs intermédiaires du réseau de neurones :
perméabilité prévue après H = 10 cycles
Comparaison avec la consigne de perméabilité

FIG.5c

EP 1 343 575 B1